Europäisches Patentamt

European Patent Office

Office européen des brevets

(19)

(11) Publication number: **0 277 235 B1**

# EUROPEAN PATENT SPECIFICATION

(12)

(45) Date of publication of patent specification: **30.12.92** (51) Int. Cl.⁵: **G11B 7/24**

(21) Application number: **87903433.8**

(22) Date of filing: **28.05.87**

(86) International application number:
**PCT/JP87/00343**

(87) International publication number:
**WO 88/00755 (28.01.88 88/03)**

(54) **OPTICAL DISC.**

(30) Priority: **22.07.86 JP 113992/86 U**
**22.07.86 JP 113993/86 U**
**22.07.86 JP 113994/86 U**
**22.07.86 JP 113995/86 U**

(43) Date of publication of application:
**10.08.88 Bulletin 88/32**

(45) Publication of the grant of the patent:
**30.12.92 Bulletin 92/53**

(84) Designated Contracting States:
**DE FR GB**

(56) References cited:
**EP-A- 0 136 041      EP-A- 0 233 644**
**CA-A- 1 204 857      DE-A- 3 441 521**
**DE-C- 0 562 944      US-A- 1 875 086**
**US-A- 3 416 154**

**Patent Abstracts of Japan, vol. 9, no. 299**
**(P-408)(2022), 27 November 1985; & JP-A-61**
**133567**

(73) Proprietor: **MITSUBISHI DENKI KABUSHIKI**
**KAISHA**
**2-3, Marunouchi 2-chome Chiyoda-ku**
**Tokyo 100(JP)**

(72) Inventor: **HATTORI, Michinobu Mitsubishi De-**
**nki K. K.**
**Itami Seisakusho 1-1, Tsukaguchihonmachi**
**8-chome**
**Amagasaki-shi Hyogo-ken 661(JP)**
Inventor: **FUJISAWA, Hidemitsu Mitsubishi**
**Denki K. K.**
**Itami Seisakusho 1-1, Tsukaguchihonmachi**
**8-chome**
**Amagasaki-shi Hyogo-ken 661(JP)**
Inventor: **KUSAURA, Akio Mitsubishi Denki K.**
**K.**
**Itami Seisakusho 1-1, Tsukaguchihonmachi**
**8-chome**
**Amagasaki-shi Hyogo-ken 661(JP)**

Patent Abstracts of Japan, vol. 9, no. 141
(P-364)(1864), 15 June 1985; & JP-A-60 20373

Patent Abstracts of Japan, vol. 6, no. 217
(P-152)(1095), 30 October 1982; JP-A-57
120243

Patent Abstracts of Japan, vol. 8, no. 55
(P-260)(1492), 13 March 1984; JP-A-58 203645

Patent Abstracts of Japan, vol. 7, no. 18
(P-170)(1163), 25 January 1983; & JP-A-57
172543

(74) Representative: **Lawson, David Glynne et al**
**MARKS & CLERK 57-60 Lincoln's Inn Fields**
**London WC2A 3LS(GB)**

## Description

The present invention relates to an optical disc.

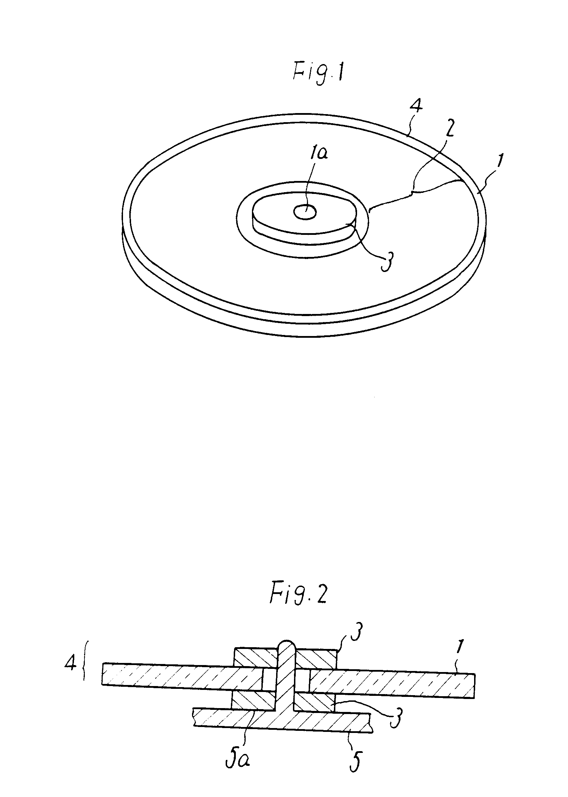

Fig. 1 is a perspective view of an optical disc according to a prior art. In the drawing, a reference numeral (1) denotes a disc-shaped substrate which is formed of such a material as polycarbonate and having a centering hole (1a) (whose diameter is 15 mm, for example) in the center. (2) denotes an information recording layer which is formed concentrically at a specified radial area on the disc substrate (1) and is used for record and reproduction of informations by an input-output device not shown. (3) denotes a disc of magnetic material whose outer diameter is smaller than the inner diameter of the information recording layer. An optical disc (4) is formed by bonding one disc (3) to upper face of the disc substrate (1) with an adhesive and further by bonding another disc (3) to lower face thereof so that the substrate is sandwiched between a pair of discs (3).

Fig. 2 is a sectional view of the optical disc (4) mounted on an optical disc driver, and in which the disk (3) is attracted by a magnet (5a) mounted on a disc turntable (5) to be fixed thereto. The optical disc (4) is tunred by turning the disc turntable (5). Under such condition, information is written in the information recording layer (2) or read out therefrom by irradiating the layer with laser beam.

According to the aforementioned prior optical disc, there is a difference between the thermal expansion coefficient ($7 \times 10^{-5}$ mm/$^\circ$C) of the disk substrate (1) and that ($1 \times 10^{-5}$ mm/$^\circ$C) of the disk (3) of magnetic material, and therefore a problem exists in that a distortion occurs in the disc substrate (1) whose thermal expansion coefficient is larger due to temperature change in the internal section of the optical driver. The distortion increases variation in birefringence of the laser beam in the disk substrate irradiated when reading out information, thereby increasing noise when reproducing the information.

The present invention was made to solve the above-discussed problem, and has an object of providing an optical disk whose distortion due to temperature change is inhibited.

EP-A-0 233 644, falling within the terms of Art.54(3) EPC and thus not being relevant to the question of inventive step discloses an optical recording disc in which a synthetic resin substrate is connected to a central magnetic metal plate by a hob made of the same or similar synthetic resin. Grooves are provided in the substrate and in the hob to minimize transmission of stresses due to thermal expansion. The hob is interposed between the substrate and the metal plate.

The present invention in one aspect provides an optical disk comprising a disk substrate (1), an information-recording layer in a specified radial area of the substrate and a central disk being fixed adjacently to the substrate by a fixing member characterized in that said fixing member extends through holes provided in the central disk, is welded to the disk substrate and made of a material having a coefficient of thermal expansion almost equivalent to that of the substrate.

The present invention also provides an optical disk comprising a disk substrate, an information-recording layer in a specified radial area of the substrate, and a central soft magnetic disk bonded with an adhesive to the substrate, characterized in that the soft magnetic disk is made of a material with a coefficient of thermal expansion almost equivalent to that of the substrate.

Since the bonding section of the disk to the disk substrate is of a material having a thermal expansion coefficient almost equivalent to that of the disk substrate according to the invention, the disk substrate is prevented from being affected by the thermal expansion of any portion of the disk other than the bonding section. As a result, the distortion of the optical disk due to temperature change can be inhibited.

Brief Description of the Drawings

Figure 1 is a perspective view showing an optical disk according to the prior art;

Figure 2 is a sectional view of the optical disk according to the prior art;

Figure 3 shows an arrangement of an optical disk according to an embodiment of the present invention, and wherein (a) is a perspective view and (b) is a sectional view;

Figure 4 is a perspective view showing an optical disk according to a further embodiment of the invention; and

Figure 5 is a perspective view showing an optical disk according to a yet further embodiment of the invention.

Best Mode for Carrying Out The Invention

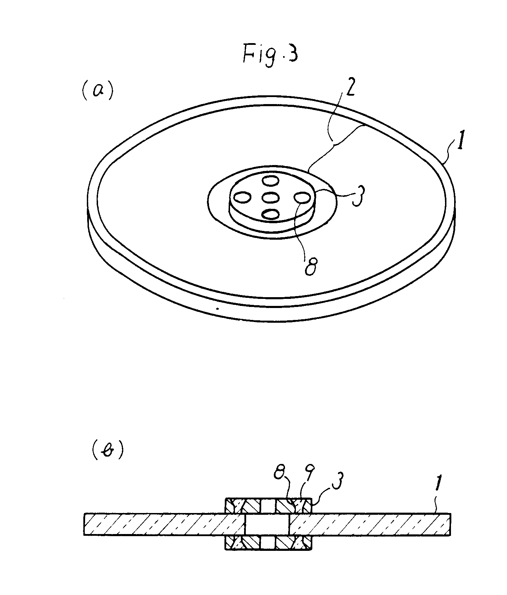

Figure 3 shows an arrangement of an optical disk according to an embodiment of the invention, and wherein (a) is a perspective view and (b) is a sectional view. In the drawing, reference numerals (1), (2) and (3) denote the same parts as the foregoing prior art.

A reference numeral (8) denotes a plurality of holes which are formed on the disk (3) and located on the circumference of a concentric circle having a specified diameter. Ends of apertures of the holes are respectively countersunk. (9) denotes a fixing member by which the disk substrate (1) is coupled with the disk (3). The fixing member (9) is made of a material almost the same as the disk substrate (1) such as polycarbonate and has its diameter allowing insertion into the hole (8). A head of the fixing member (9) is so designed as to be fit for a countersink of the hole (8). The fixing member (9) is designed longer by a certain length than the width of the disk (3), forming a welding section of specified configuration on a surface facing to the disk substrate (1), and connects the disk substrate (1) and the disk (3) being welded by ultrasonic welding means.

According to the optical disk of the above-described composition, when the disk substrate (1) and the disk (3) are expanded due to thermal expansion, the difference in thermal expansion coefficient between the disk substrate (1) and the disk (3) are reduced, since the thermal expansion coefficient of the fixing member (9) coupled is almost equivalent to that of the disk substrate (1).

In addition, the head of the fixing member (9) is designed according to the configuration of the hole in the foregoing embodiment, but it is also satisfiable that both ends of a bar-like fixing member with its diameter almost the same as the hole are welded by heat caulking means to perform the same function as the foregoing embodiment.

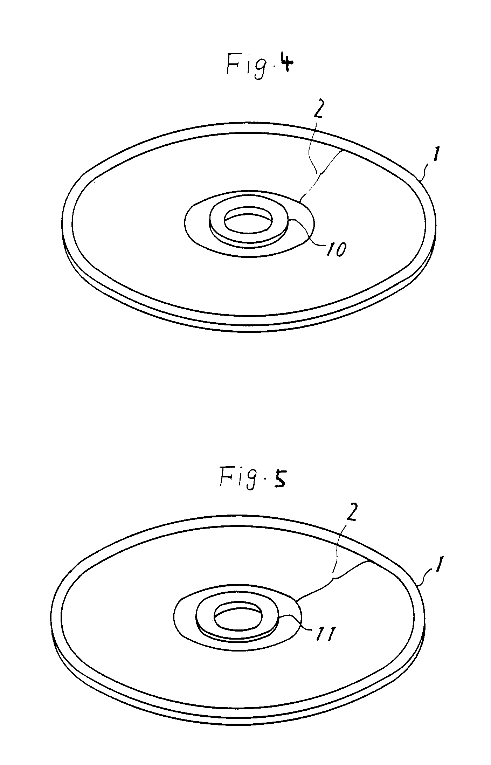

Fig. 4 is a perspective view showing an optical disc according to a further embodiment of the invention, and wherein reference numerals (1) and (2) denotees the same parts as the foregoing prior art. A reference numeral (10) denotes a disc of soft magnetic material having a specified outer diameter, which is smaller than the inner diameter of the information recording layer (2), and a specified inner diameter. The disc (10) is made by molding a material whose principal component is Fe-Al-Si (whose thermal expansion coefficient is $6.7 \times 10^{-5}$ mm/°C or so), for example, and has a certain value of magnetic intensity. In such optical disc, the difference in their respective thermal expansion coefficients is small, and therefore the distortion occured in the disc substrate is reduced when expanded thermally.

In addition, the soft magnetic material forming the disc is not limited to the Fe-Al-Si, but such material as Mn-Zn-Si, Ni-Zn-Si is also satisfiable to perform the same function as the foregoing embodiment.

Fig. 5 is a perspective view showing an optical disc according to a yet further embodiment of the invention. In the drawing, reference numerals (1) and (2) are the same as the foregoing prior art. A reference numeral (11) denotes a disc having specified inner and outer diameters which is formed by molding a material mixed with a magnetic material substantially the same as the disc substrate (1). The disc (11) is bonded to the disc substrate with a specified adhesive. When the disc substrate (1) is of a material such as polycarbonate, the disc (11) is formed by filling up a polycarbonate material with a certain amount of magnetic powder, mixing it so that the magnetic powder is distributed as specified, and molding the mixture by molding means.

In the disc of such arrangement, the difference between the disc substrate (1) and the disc (11) in their thermal expansion coefficients is small when thermally expanded, and the occurence of distortion in the disc substrate (1) is considerably reduced.

In this connection, the amount of magnetic powder to be added to the disc (11) is set at least to an amount of the magnetic material attracted by and fastened to the optical disc by the action of a magnet of the optical disc driver.

Industrial Applicability

The present inventon is applicable to an optical disc for use in a memory of a computer to inhibit the optical disc from distortion.

## Claims

1. An optical disk comprising a disk substrate (1), an information-recording layer (2) in a specified radial area of the substrate (1) and a central disk (3) being fixed adjacently to the substrate (1) by a fixing member (9) characterized in that said fixing member (9) extends through holes (8) provided in the central disk (3), is welded to the disk substrate (1) and made of a material having a coefficient of thermal expansion almost equivalent to that of the substrate (1).

2. An optical disk comprising a disk substrate (1), an information-recording layer (2) in a specified radial area of the substrate (1), and a central soft magnetic disk (10) bonded with an adhesive to the substrate (1), characterized in that the soft magnetic disk (10) is made of a material with a coefficient of thermal expansion almost equivalent to that of the substrate (1).

3. An optical disk as claimed in Claim 2 in which the magnetic disk is made of a soft magnetic Fe-A1-Si, Ni-Zn-Si, or Mn-Zn-Si material.

4. An optical disk as claimed in Claim 2 in which the magnetic disk is made of a magnetic powder mixed with a material substantially the same as the substrate (1).

**Patentansprüche**

1. Optische Speicherplatte, mit einem Plattensubstrat (1), einer Informationsaufzeichnungsschicht (2) in einem spezifizierten radialen Gebiet des Substrats (1), und einer zentralen Scheibe (3), die an das Substrat (1) angrenzt und mittels eines Befestigungselements (9) daran befestigt ist, dadurch gekennzeichnet, daß das Befestigungselement (9) sich durch in der zentralen Scheibe (3) vorgesehene Bohrungen (8) erstreckt, mit dem Plattensubstrat (1) verschweißt ist, und aus einem Material besteht, das einen Wärmeausdehnungskoeffizienten aufweist, der beinahe gleich dem Wärmeausdehnungskoeffizienten des Substrats (1) ist.

2. Optische Speicherplatte, aus einem Plattensubstrat (1), einer Informationsaufzeichnungsschicht (2) in einem spezifizierten radialen Gebiet des Substrats (1), und einer zentralen, weichmagnetischen Scheibe (10), die mittels eines Klebers mit dem Substrat (1) verbunden ist, dadurch gekennzeichnet, daß die weichmagnetische Scheibe (10) aus einem Material besteht, das einen Wärmeausdehnungskoeffizienten aufweist, der beinahe gleich dem Wärmeausdehnungskoeffizienten des Substrats (1) ist.

3. Optische Speicherplatte gemäß Anspruch 2, bei der die magnetische Scheibe aus einem weichmagnetischen Fe-Al-Si-, Ni-Zn-Si- oder Mn-Zn-Si-Material besteht.

4. Optische Speicherplatte gemäß Anspruch 2, bei der die magnetische Scheibe aus einem magnetischen Pulver hergestellt ist, das mit einem Material gemischt wurde, das im wesentlichen dem Material entspricht, aus dem das Substrat (1) besteht.

**Revendications**

1. Un disque optique comprenant un substrat de disque (1), une couche d'enregistrement de l'information (2) dans une zone radiale spécifiée du substrat (1) et un disque central (3) fixé près du substrat (1) par un élément de fixation (9), caractérisé en ce que ledit élément de fixation (9) s'étend à travers des trous (8) agencés dans le disque central (3), qu'il est soudé au substrat du disque (1) et fait en un matériau d'un coefficient de dilatation thermique pratiquement équivalent à celui du substrat (1).

2. Un disque optique comprenant un substrat de disque (1), une couche d'enregistrement de l'information (2) dans une zone radiale spécifiée du substrat (1) ainsi qu'un disque magnétique doux central (10) fixé par un adhésif au substrat (1), caractérisé en ce que le disque magnétique doux (10) est fait en un matériau d'un coefficient de dilatation thermique pratiquement équivalent à celui du substrat (1).

3. Un disque optique selon la revendication 2, dans lequel le disque magnétique est en un matériau magnétique doux de Fe-Al-Si, de Ni-Zn-Si ou de Mn-Zn-Si.

4. Un disque optique selon la revendication 2, dans lequel le disque magnétique est fait en une poudre magnétique mélangée avec un matériau pratiquement égal à celui du substrat (1).

Fig.1

Fig.2

Fig. 3

(a)

(b)

Fig. 4

Fig. 5